(19) Europäisches Patentamt
European Patent Office
Office européen des brevets

(11) Numéro de publication: **0 560 899 B1**

(12) # FASCICULE DE BREVET EUROPEEN

(45) Date de publication de fascicule du brevet: **24.05.95**

(51) Int. Cl.$^6$: **C08G 77/28**, C08G 77/392, H01B 1/12, H01M 8/02, H01M 2/16

(21) Numéro de dépôt: **92901756.4**

(22) Date de dépôt: **05.12.91**

(86) Numéro de dépôt internationale :
**PCT/FR91/00974**

(87) Numéro de publication internationale :
**WO 92/10528 (25.06.92 92/14)**

(54) **MEMBRANES A BASE DE POLYORGANOSILOXANES SULFONES, LEUR PREPARATION ET LEUR APPLICATION COMME CONDUCTEURS IONIOUES SOLIDES.**

(30) Priorité: **05.12.90 FR 9015219**

(43) Date de publication de la demande:
**22.09.93 Bulletin 93/38**

(45) Mention de la délivrance du brevet:
**24.05.95 Bulletin 95/21**

(84) Etats contractants désignés:
**DE FR GB IT**

(56) Documents cités:
**EP-A- 0 098 946**
**FR-A- 2 413 416**
**GB-A- 1 451 726**

(73) Titulaire: **Etablissement Public dit: CENTRE NATIONAL DE LA RECHERCHE SCIENTIFIOUE (CNRS)**
**15, Ouai Anatole France**
**F-75007 Paris (FR)**

(72) Inventeur: **POINSIGNON, Christiane**
**34, avenue Jean-Perrot**
**F-38100 Grenoble (FR)**
Inventeur: **SANCHEZ, Jean-Yves**
**"Le Chaboud',**
**781, chemin de Chartreuse**
**F-38330 Saint-Ismier (FR)**
Inventeur: **DENOYELLE, Alain**
**80, avenue Jean-Perrot**
**F-38100 Grenoble (FR)**
Inventeur: **ARMAND, Michel**
**"Les Corjons"**
**F-38410 Saint-Martin-d'Uriage (FR)**

(74) Mandataire: **Tonnellier, Jean-Claude**
**Cabinet Nony & Cie.**
**29, rue Cambacérès**
**F-75008 Paris (FR)**

**EP 0 560 899 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet de nouvelles membranes à base de polyorganosiloxanes sulfonés, leur préparation et leur application comme conducteurs ioniques solides.

On sait que les matériaux conducteurs ioniques solides présentent un grand intérêt dans la réalisation d'accumulateurs et de piles électriques, de jauges d'activité spécifique, de supercondensateurs, de capteurs, de systèmes électrochromes et de membranes échangeuses d'ions. Ils permettent en particulier la réalisation de systèmes électrochimiques entièrement solides.

Les matériaux (polyorganosiloxanes) constituant la membrane de l'invention sont obtenus par le procédé classique sol-gel, c'est-a-dire par hydrolyse d'alkoxysilanes convenablement substitués puis polycondensation. Ce sont des produits amorphes, et leur procédé de préparation permet aisément la réalisation de couches minces. Ils ne possèdent pas les inconvénients observés avec les produits cristallins ou vitrocéramiques utilisés jusqu'à présent comme conducteurs ioniques solides, à savoir : anomalies de dilatation gênantes pour certaines utilisations, et structure hétérogène caractérisée notamment par des joints de grains qui affectent les propriétés électriques et mécaniques et qui diminuent la durée de vie des systèmes dans lesquels ils sont utilisés.

Les polyorganosiloxanes utilisés selon l'invention sont caractérisés par la présence de motifs benzyl sulfonique qui permet de leur conférer, à l'état hydraté, des propriétés de conductivité importantes, supérieures à celle du Nafion. Par l'adjonction de motifs siloxane convenables, il est possible de rendre les produits finals insolubles et/ou de leur conférer des propriétés mécaniques appropriées (par exemple plasticité) et/ou de les réticuler, ce qui permet notamment la réalisation de membranes cohérentes, souples ou rigides.

On sait que les polyorganosiloxanes sont des polymères organo-minéraux obtenus au départ de dérivés organosiliciés (c'est-à-dire ayant au moins une liaison silicium-carbone) contenant des groupements alkoxysilane. leur obtention par le procédé sol-gel est bien connue. Il s'agit d'un procédé basé sur une transition liquide-solide (passage d'une solution à un gel), selon des réactions successives d'hydrolyse et de polycondensation.

La réaction d'hydrolyse de l'alkoxyde est schématiquement la suivante :

$\geqslant$Si-OR + $H_2O$ --------> $\geqslant$Si-OH + ROH.

Cette réaction est suivie d'un traitement thermique à température peu élevée donnant lieu à une réaction de polycondensation, soit entre un silanol et un siloxane non hydrolysé, avec formation d'un alcool ROH, selon la réaction :

$\geqslant$Si-OR + HO-Si$\leqslant$ ---------> $\geqslant$Si-O-Si$\leqslant$ + ROH,

soit entre deux silanols, avec formation d'eau, selon la réaction :

$\geqslant$Si-OH + HO-Si$\leqslant$ ---------> $\geqslant$Si-O-Si$\leqslant$ + $H_2O$.

Dans les réactions schématiques ci-dessus, on n'a représenté que la réaction d'un des substituants alkoxyle du silicium dans le produit de départ. Bien entendu, les mêmes réactions d'hydrolyse et de polycondensation ont lieu avec les autres substituants alkoxylés de l'atome de silicium présents dans le produit de départ, de sorte que le composés polycondensé, lorsque le produit d'hydrolyse est un silanetriol, conduit à la formation de produits de polycondensation tridimensionnels, par exemple du type :

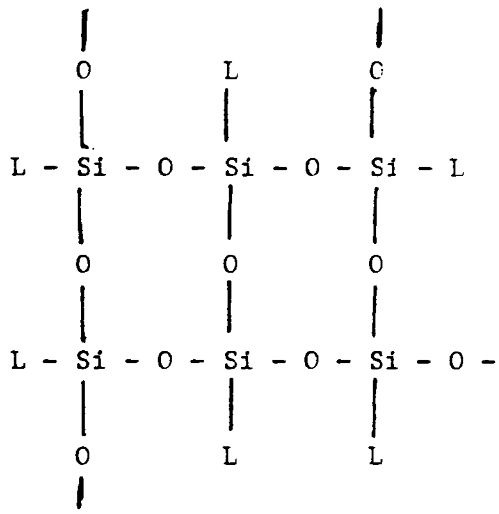

L représentant un radical organique lié au silicium par une liaison carbone-silicium.

Bien entendu, diverses configurations du polymère tridimensionnel sont possibles, car la préparation de la réaction de polycondensation a évidemment un caractère aléatoire.

On voit que les polycondensats obtenus à partir de trialkoxysilanes peuvent être considérés comme constitués de motifs répondant à la formule brute ($L\text{-}SiO_{3/2}$).

Il est bien entendu possible de mélanger aux trialkoxysilanes de départ des dialkoxysilanes de formule schématique :

$L_2Si(OR)_2$,

dont l'hydrolyse puis la condensation avec d'autres motifs silanol permet la propagation de la réaction de polycondensation en fournissant des motifs de formule brute :

($L_2SiO_{2/2}$).

De façon analogue, la présence dans le produit de départ de motifs tétraalkoxysilane Si $(OAlk)_4$ permet après hydrolyse la propagation de la réaction de polycondensation, conduit à la présence dans le polymère tridimensionnel final de motifs de formule brute (V) :

($SiO_2$) (V)

Par l'addition de motifs siloxane convenables, on peut modifier les propriétés du polymère final.

Sur la réalisation de polyorganosiloxanes, et sur l'addition de divers motifs siloxanes destinés à modifier les propriétés, notamment mécaniques, du polyorganosiloxane final, il existe une littérature abondante. On peut citer par exemple les demandes de brevet FR-2 413 400, 2 413 415, FR-2 413 416 ; le brevet US 4 374 696 ; et la demande de brevet PCT-WO 88/00215.

La présente invention a donc pour objet une membrane, ayant notamment des propriétés de conducteur ionique, constituée en un matériau à base d'un polyorganosiloxane contenant au moins 10 %, en motifs, de motifs de formule brute (I) :

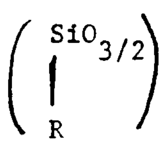 (I)

dans laquelle :

R, lié au silicium par une liaison silicium-carbone, représente

$-CH_2\text{-}Ar\text{-}(SO_3H)_t$

Ar est un groupement phénylène éventuellement substitué, et t représente le taux de sulfonation des groupements Ar qui peuvent varier de 0,1 à 2,
ledit polyorganosiloxane étant éventuellement présent sous forme hydratée.

Généralement, le matériau constituant la membrane de l'invention contient au moins 30 %, en motifs, de motifs de formule I, et de préférence au moins 50 % de tels motifs.

Pour certaines applications nécessitant une conductivité ou une capacité d'échange importante, on utilisera de préférence, un polyorganosiloxane contenant au moins 70 %, et en particulier au moins 80 % de motifs de formule (I).

Lorsque les propriétés mécaniques de la membrane ne sont pas décisives dans le choix du matériau, on peut utiliser des polyorganosiloxanes ayant des teneurs plus élevées en motifs de formule I. En particulier, dans les applications concernant la réalisation de supercondensateurs, piles de longue durée à électrolyte solide, dispositifs électrochromes, capteurs, etc ..., on peut utiliser avantageusement des polyorganosiloxanes constitués uniquement de motifs de formule I.

Le groupement Ar peut être substitué par exemple par un ou plusieurs halogènes tels que le fluor ou le chlore.

Lorsqu'ils ne sont pas constitués uniquement de motifs de formule I, les polyorganosiloxanes utilisés selon l'invention contiennent d'autres motifs siloxane provenant notamment d'autres trialkoxysilanes ou dialkoxysilanes, comme cela sera précisé ci-après. L'addition de tels motifs, destinée à modifier les propriétés, notamment les propriétés mécaniques, du polyorganosiloxane final, est connue en soi ; voir notamment les brevets et demandes de brevet cités ci-dessus.

Les polyorganosiloxanes utilisés selon l'invention ne contiennent généralement pas de motifs minéraux de formule brute ($SiO_2$) qui résultent de l'utilisation, dans le mélange de produits de départ, de tétra-alkoxysilanes, comme rappelé ci-dessus. En effet, de tels motifs motifs minéraux n'apportent pas de propriétés intéressantes dans la réalisation de membranes, et réduisent le taux de groupements sulfoniques actifs. Toutefois, dans certaines applications, la présence d'une faible quantité de motifs ($SiO_2$) ne modifie pas sensiblement les propriétés de la membrane. La membrane de l'invention peut donc contenir de tels motifs ($SiO_2$) à raison de moins de 10 % et de préférence moins de 5% en motifs.

L'invention a donc notamment pour objet une membrane à base d'un polyorganosiloxane tel que défini ci-dessus, qui contient en outre jusqu'à 90 % en motifs, de motifs de formule (II)

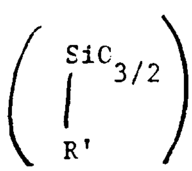 (II)

dans laquelle R' représente - H, ou bien R', lié au silicium par une liaison silicium-carbone, est un groupement organique monovalent facilitant la réticulation ou bien R' est un groupement divalent réticulant dont la liaison pendante est une liaison carbone-silicium, reliant entre eux deux motifs du polyorganosiloxane.

Généralement, les motifs de formule II, III, IV et/ou V représentent moins de 70 % et en particulier moins de 50 % de l'ensemble des motifs du polyorganosiloxane.

Lorsque R' est un groupement monovalent, il s'agit notamment d'un groupement alcényle à double liaison terminale ayant de 2 à 6 atomes de carbone tel qu'un groupement vinyle ou allyle. Lorsque R' est un groupement divalent, il s'agit par exemple d'un groupement alcénylène ayant de 4 à 12 et en particulier 4 à 6 atomes de carbone, ou un groupement - $(CH_2)_2$- $C_6H_4$ - $(CH_2)_2$-.

L'invention a également pour objet une membrane à base d'un polyorganosiloxane, tel que défini précédemment, qui comporte en outre des motifs de formule (III) et/ou de formule (IV)

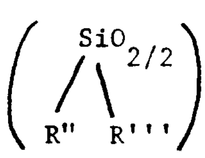 (III) 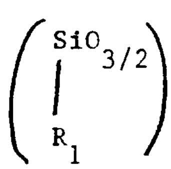 (IV)

dans laquelle $R_1$, R" et R"' représentent indépendamment des groupements organiques, liés au silicium par une liaison silicium-carbone, qui sont capables de modifier les propriétés mécaniques dudit polyorganosiloxane (par exemple, acquisition de la plasticité favorisant la mise en forme). Les groupements $R_1$, R" et R"' représentent par exemple des groupements aryle, et en particulier phényle, éventuellement substitués, ou des groupements alkyle ayant par exemple 1 à 18 atomes de carbone. Les groupements aryle (en particulier phényle), peuvent être substitués notamment par un ou plusieurs halogènes (fluor ou chlore).

L'invention a notamment pour objet des membranes à base de polyorganosiloxanes constitués uniquement de motifs de formule (I). Ces produits sont solubles dans l'eau.

Les polyorganosiloxanes obtenus selon le procéde' qui sera décrit ci-après contiennent de l'eau de solvatation (généralement au moins 3 molécules d'eau par molécule de groupement sulfonique à 25 ° C). C'est sous cette forme hydratée qu'ils ont des propriétés de conducteurs protoniques. Cette eau de solvatation peut-être éliminée par chauffage à une température appropriée. Les produits non hydratés ne sont pas conducteurs, mais le redeviennent par réhydratation.

L'invention a également pour objet un procédé de préparation d'une membrane à base d'un polyorganosiloxane tel que défini précédemment, caractérisé par le fait que l'on soumet un composé de formule $Si(OAlk)_3R_2$, dans laquelle $R_2$ représente un groupement benzyle éventuellement substitué non sulfoné ou un groupement $-CH_2-Ar-SO_3H$, Ar étant un groupement phénylène éventuellement substitué, et Alk est un groupement alkyle inférieur, éventuellement en mélange, dans les proportions requises, avec au moins un composé de formules $Si(OAlk)_3R_3$ et/ou Si $(OAlk)_4$ et/ou $Si(OAlk)_2$R"R"' et/ou $Si(OAlk)_3R_1$, dans lesquelles $R_1$, R', R" et R"' sont tels que définis précédemment et $R_3$ est un groupement précurseur d'un groupement réticulant (groupement R' tel que défini précédemment),
à une réaction d'hydrolyse et de polycondensation, selon les méthodes connues, pour obtenir l'organosiloxane correspondant, puis que, dans le cas où $R_2$ représente un groupement benzyle non sulfoné éventuellement substitué, l'on soumet le produit obtenu à une réaction de sulfonation, que, le cas échéant, on soumet le produit obtenu à une réaction de réticulation selon les méthodes connues en soi et que l'on met le produit sous la forme désirée pour constituer ladite membrane.

Le groupement $R_3$ peut représenter notamment un groupement alcényle à double liaison terminale ayant notamment de 2 à 6 atomes de carbone, en particulier un groupement vinyle ou allyle, et dans ce cas le produit final pourra être réticulé par réaction de deux groupements $(R_3)$ alcényle $-(CH_2)_n CH = CH_2$ pour former entre deux atomes de silicium un pont alcénylène $-(CH_2)_{n+1}-CH = CH-(CH_2)-_{n+1}$ ayant 4 à 12 atomes de carbone. Le groupement $R_3$ peut aussi représenter un hydrogène, et dans ce cas on obtient également un produit qui pourra être ultérieurement réticulé (après la réaction d'hydrolyse-polycondensation et après la réaction éventuelle de sulfonation) par hydrosilylation en présence d'un agent réticulant diénique tel qu'un divinylbenzène, selon une méthode connue en soi ; voir par exemple Chalk et Harrod, J.A.C.S 87, 16 (1965). On peut opérer dans un solvant tel que le dichlorométhane, par exemple en présence d'acide hexachloroplatinique comme catalyseur. Le diène est ajouté au mélange réactionnel en quantité molaire sensiblement égale à la moitié de la quantité molaire du composé $Si(OAlk)_3R_3$(avec $R_3 = H$). La réaction de réticulation est alors effectuée par exemple sous l'action d'une source de rayonnement ultraviolet.

Dans des modes de réalisation particuliers, le procédé de l'invention peut encore présenter les caractéristiques suivantes, prises isolément ou en combinaison :

- la réaction d'hydrolyse et de polycondensation consiste à ajouter au produit de départ ou au mélange de produits de départ une quantité d'eau suffisante pour hydrolyser les groupements alkoxysilane des produits de départ en groupements silanols correspondants, puis à chauffer le mélange réactionnel jusqu'à poids constant, à une température pouvant aller de 40 à 70 ° C ;
- la réaction d'hydrolyse est effectuée de préférence en présence d'un catalyseur acide tel que l'acide trifluorométhanesulfonique (acide triflique), l'acide sulfurique, l'acide chlorhydrique, etc ;
- le groupement Alk est un groupement méthyle, éthyle ou isopropyle ;
- la réaction de sulfonation est effectuée à l'aide d'un acide halogénosulfonique, en particulier de l'acide chlorosulfonique. Cette réaction de sulfonation est connue en soi.

Elle peut être effectuée soit préalablement sur le benzyl trialkoxysilane soit sur le produit final. Dans le premier cas, la fonction acide sulfonique doit alors être bloquée temporairement, par exemple sous forme du sulfonate de pyridinium correspondant. La fonction acide sulfonique peut être ensuite libérée par addition d'HCl à la fin du procédé d'hydrolyse-polycondensation.

Lorsqu'un groupement réticulant du type alcènyle est présent, la réticulation peut être effectuée sur le matériau obtenu, et mis sous forme du produit final désiré, par chauffage final, par exemple à une température de 80 - 120 ° C. Lorsque le produit de départ contient des produits de formule $Si(OAlk)_3R_3$ - (avec $R_3 = H$), la réticulation est effectuée avec un diène tel que le divinylbenzène, en présence d'acide hexachloroplatinique, comme indiqué ci-dessus. Bien entendu, on met le matériau sous la forme désirée

avant d'initier la réaction d'hydrosilylation par l'action du rayonnement ultraviolet. Le produit est réticulé dans ce cas par la formation de ponts - $(CH_2)_2$ - $C_6H_4$ - $(CH_2)_2$ - entre deux atomes de silicium.

La présente invention a également pour objet une membrane pouvant être obtenue par le procédé qui vient d'être défini.

L'invention a également pour objet l'utilisation d'une telle membrane comme conducteur ionique (notamment protonique) solide.

On sait que les conducteurs ioniques solides peuvent être utilisés comme électrolytes dans des accumulateurs électriques ; dans des piles électriques à longue durée de vie, car l'utilisation de l'électrolyte solide, qui n'est pas conducteur électronique, évite la décharge de la pile dans des courts-circuits internes ; dans des capteurs, dans lesquels on mesure en circuit ouvert une différence de potentiel induite par une différence de concentration d'une espèce chimique en contact avec les électrodes ; dans les systèmes à interfaces électrode-électrolyte bloquantes constituant des supercondensateurs capables de stocker l'énergie électrique ; et dans les systèmes à électrodes "électrochrome" dans lesquels l'injection ou le départ d'ions induit un changement de coloration (afficheurs électrochromiques).

En outre, lorsqu'ils sont insolubles dans l'eau et ont les propriétés mécaniques appropriées, les polyorganosiloxanes utilisés selon l'invention peuvent constituer des membranes de piles à combustibles du type à hydrogène/oxygène ou à méthanol.

L'un des avantages des polyorganosiloxanes utilisés selon l'invention est qu'ils résistent à des températures élevées, supérieures à 200 °C.

Un intérêt supplémentaire des polyorganosiloxanes utilisés selon l'invention réside dans leur facilité de mise en forme. Ils se distinguent en cela des ionomères perfluorés du type Nafion, dont la mise en forme est difficile ; voir par exemple le brevet FR-2 597 491. Leur procédé de préparation permet de les obtenir sous la forme de films, en particulier de films minces, sur des supports solides appropriés, et dans ce cas, la réaction de sulfonation peut-être réalisée après la mise en forme, sur le film mince lui-même. Ils peuvent également être obtenus sous la forme de poudres. Les poudres peuvent elles-mêmes donner des films minces par mise en solution dans un solvant approprié, dépôt de la solution sur un support convenable et évaporation du solvant, selon les méthodes connues. Enfin, les poudres de polyorganosiloxanes ayant les propriétés de plasticité requises peuvent être mises en forme par pressage à chaud.

L'invention concerne également tout dispositif fondé sur l'emploi d'un conducteur ionique (protonique) solide entre deux électrodes, dans lequel ledit conducteur ionique solide est une membrane telle que définie précédemment. Ces dispositifs sont notamment des piles à combustibles, et des dispositifs "tout solide" tels que les piles à longue durée de vie, les capteurs, les systèmes de modulation de la lumière (appelés aussi électrochromes), les supercondensateurs, etc ...

Le principe de ces divers dispositifs est connu en soi. Des exemples de telles utilisations sont donnés ci-après dans la partie expérimentale. Comme indiqué ci-dessus, la membrane de l'invention doit être à l'état hydraté lors du fonctionnement du dispositif où elle est introduite. Dans le cas où la membrane est utilisée dans une pile à combustible, il est préférable bien entendu d'employer une membrane réticulée, insoluble dans l'eau, car le fonctionnement d'une telle pile produit de l'eau.

Les exemples suivants illustrent l'invention sans toutefois la limiter.

## EXEMPLE 1

Acide polybenzylsiloxane sulfonique(PBSS)

Le produit de départ est le benzyltriéthoxysilane (TEBS) commercialisé par Petrarch Systems.

On dissout 15 g de TEBS dans 375 ml de méthanol. On ajoute 3,2 $cm^3$ d'eau et quinze gouttes d'acide triflique concentré.

On agite pendant 30 min à température ambiante.

On transfère alors la solution dans une boite de Petri en polycarbonate, que l'on place dans une étuve à 75 °C pendant 2 semaines.

On obtient le polybenzylsiloxane (PBS).

Le spectre infrarouge est en accord avec la structure indiquée.

On obtient des résultats analogues en remplaçant l'acide triflique par l'acide sulfurique.

Masse moléculaire :

Par chromatographie d'exclusion stérique, avec comparaison avec des échantillons étalons de polystyrène, on a obtenu les résultats suivants :

$\overline{M}p$ = 18 900

$\overline{M}n$ = 3 600,

soit un indice de polymolécularité de 5,3.

Il est possible d'augmenter sensiblement Mn et de diminuer l'indice de polymolécularité en préparant une solution de PBS dans le toluène et en précipitant le PBS par addition de méthanol.

Sulfonation:

On dissout le PBS ainsi obtenu dans 30 $cm^3$ de tétrachlorure de carbone ou de dichlorométhane.

On ajoute goutte à goutte 5,85 g d'acide chlorosulfonique. Cette quantité est calculée pour obtenir un taux de sulfonation de 0,85. On maintient l'agitation pendant 30 min à température ambiante.

On observe la précipitation de l'acide polybenzylsiloxane sulfonique (PBSS).

Le précipité est lavé successivement avec du tétrachlorure de carbone ou du dichlorométhane.

On isole le précipité par filtration ou centrifugation.

Après élimination du solvant résiduel sous pression réduite, on obtient le PBSS sous la forme d'une poudre très soluble dans l'eau à température ambiante.

Par évaporation de l'eau, la solution aqueuse donne un film dont la coloration varie avec le taux d'hydratation. Le produit est blanc et translucide à l'état fortement hydraté, il passe au jaune transparent puis à l'ocre quand il se dessèche. Cette déshydratation s'accompagne d'une modification des propriétés mécaniques, le PBSS devenant de plus en plus dur et cassant. Par réhydratation du matériau déshydraté, on obtient à nouveau le produit hydraté sous la forme d'un film blanc et translucide.

Le produit séché à 50 °C contient au moins 3 molécules d'eau par groupement sulfonique.

La masse volumique du PBSS, mesurée sur des échantillons de dimensions connues varie entre 1,2 et 1,6 $g/cm^3$ environ, suivant le degré d'hydratation.

Le spectre infrarouge du PBSS déposé sur des plaquettes de silicium est en accord avec la structure indiquée. Une bande autour de 1730 $cm^{-1}$ caractérise le proton hydraté et l'eau de solvatation entourant les groupements sulfoniques.

Température de transition vitreuse : par calorimétrie différentielle à balayage, on détermine une température de transition vitreuse (Tg) de - 70 ± 20 °C pour le PBSS (+ 30 ± 5 °C pour le PBS).

Analyse thermogravimétrique :

Les mesures effectuées montrent une dégradation des groupements organiques à partir de 300 °C.

La déshydratation mesurée entre 50 et 200 °C est de 15 %. Elle correspond au départ d'environ 3 molécules d'eau par groupement sulfonique.

Capacité d'échange :

Pour mesurer la capacité d'échange, on dose les fonctions sulfoniques par une solution d'hydroxyde de sodium, le titrage étant suivi au pH-mètre. La capacité d'échange mesurée est d'environ 3,8 moles $H^+$/kg.

Conductivité :

Elle est mesurée à température ambiante par spectroscopie d'impédance sur des films de dimensions connues.

Les valeurs de conductivité trouvées varient de $2.10^{-3}$ à $7.10^{-3} \Omega^{-1}.cm^{-1}$. La dispersion des valeurs provient essentiellement des différences d'hydratation des échantillons. On observe une diminution de la conductivité quand l'échantillon est légèrement chauffé. Cette diminution de la conductivité est due à la déshydratation : les sites sulfoniques sont moins solvatés, et il en résulte une diminution de la mobilité du proton.

EXEMPLE 2

Acide poly p-fluorobenzylsiloxane sulfonique

On opère de façon analogue à celle décrite à l'exemple 1, en remplaçant le TEBS par le parafluorobenzyltriéthoxysilane.

Le parafluorobenzyltriéthoxysilane est obtenu par synthèse à l'aide d'un dérive organo-magnésien. Pour cela, le chlorure de parafluorobenzyle (produit commercialisé par JANSEN) est mis en solution à 17 % en volume dans l'éther éthylique. On opère sous atmosphère d'argon. La solution obtenue est versée goutte à goutte sur du magnésium (en excès de 10 %) dans l'éther. La solution est ensuite maintenue pendant 3 heures à reflux pour dissoudre tout le magnésium. La solution obtenue est ajoutée goutte à goutte dans une solution à 13 % en volume de tétrathoxysilane dans l'éther éthylique. La solution est maintenue pendant 1 heure à reflux, puis pendant une nuit à température ambiante, sous courant d'argon. Elle est filtrée et l'éther est évaporé. On obtient ainsi le p-fluorobenzyltriéthoxysilane sous la forme d'un liquide.

Ce produit est hydrolysé par l'eau en présence d'acide triflique, de façon analogue à celle décrite à l'exemple 1, pendant 1 heure à température ambiante.

On met ensuite le produit hydrolysé à l'étuve à 75 °C pendant une nuit. On obtient un solide marron que l'on lave avec du pentane puis de l'eau, dans lesquels il est insoluble. Le produit obtenu est soluble dans le méthanol et le THF.

Le spectre infrarouge présente un pic caractéristique à 1384 $cm^{-1}$ qui peut être attribué à la liaison fluor-carbone aromatique, alors que le pic correspondant apparaît à 1229 $cm^{-1}$ pour le chlorure de parafluorobenzyle.

Sulfonation : Elle est effectuée de façon analogue à celle décrite à l'exemple 1. La réaction de sulfonation est quantitative

## EXEMPLE 3

### Poly (acide benzyl sulfonique siloxane-co-vinyl siloxane)

### Hydrolyse et copolycondensation du TEBS et du triméthoxyvinylsilane (TMVS)

On opère de façon analogue à celle décrite à l'exemple 1, au départ du TEBS et du TMVS, en ajoutant 20 % en mole de TMVS (Petrarch Systems) par rapport au TEBS initial.

La polycondensation dure 1 semaine à 75 °C.

Le polycondensat obtenu contient 17 % en moles de motifs vinylsiloxanes.

La sulfonation est effectuée comme à l'exemple 1 mais, pour éviter la sulfonation des groupements vinyle, on opère à basse température. Deux essais ont été réalisés, l'un à - 9 °C, l'autre à - 20 °C, pendant une demi-heure. Le matériau obtenu est lavé successivement avec du tétrachlorure de carbone, ou du dichlorométhane et de l'eau, dans lesquels il est insoluble.

On peut améliorer le rendement de la sulfonation en opérant à - 20 °C pendant un temps plus long.

On obtient ainsi un co-polycondensat appelé par convention poly (acide benzyl sulfonique siloxane-co-vinyl siloxane) (en abrégé $PBVS_2S$) comportant, en motifs, 5/6 de motifs benzylsiloxane sulfonés et 1/6 de motifs vinylsiloxane. Cette nomenclature conventionnelle signifie que les groupements benzylsulfonique et vinyle sont liés à des atomes de silicium différents.

Le produit obtenu est insoluble dans l'eau, même à chaud. Comme dans le cas du PBSS de l'exemple 1, sa couleur varie avec son degré d'hydratation.

Le produit se présente sous la forme d'une poudre amorphe, ce qui a été vérifié par diffraction des rayons X.

La réticulation (par les groupements vinyle) s'effectue principalement par chauffage, par exemple à 100 °C. On peut donc avantageusement effectuer cette réticulation, après mise en forme finale du matériau obtenu, par chauffage à cette température.

Capacite d'échange :

Pour l'échantillon sulfoné à - 9 °C, la capacité d'échange est de 4,1 moles $H^+$/kg. Le taux pratique de sulfonation est 0,96.

Le taux pratique de sulfonation est défini comme le rapport entre le nombre de groupes benzyle sulfonés et le nombre total de groupes benzyle.

L'échantillon sulfoné à - 20 °C pendant une demi-heure a une capacité d'échange de 1,7 moles $H^+$/kg et un taux pratique de sulfonation de 0,31.

L'échantillon sulfoné à - 20 °C pendant un temps de 1 heure a une capacité d'échange de 2,9 moles $H^+$/kg et un taux de sulfonation de 0,53.

Conductivité :

La conductivité du produit obtenu, pressé sous forme de membranes, est de $1,3.10^{-3}\Omega^{-1}.cm^{-1}$ pour le premier échantillon, et de $8,5.10^{-5}\Omega^{-1}.cm^{-1}$ pour le second échantillon.

Lorsque le second échantillon est placé pendant 24 heures dans une enceinte à pression saturante de vapeur d'eau, sa conductivité s'élève à $1,5.10^{-2}\Omega^{-1}.cm^{-1}$. Cette augmentation de conductivité, est à relier à l'augmentation de la teneur en eau dans le matériau.

Analyse thermogravimétrique :

On observe une forte déshydratation entre 84 et 155 °C. Jusqu'à 280 °C on observe une perte de poids qui peut être attribuée au départ de molécules d'eau liées aux groupes sulfoniques. Au-delà de 280 °C, ce sont les fonctions alcoxyles et hydroxyles résiduelles qui s'éliminent. Au-dessus de 420 °C, il y a dégradation du polycondensat.

La déshydratation mesurée entre 80 et 150 °C correspond au départ de 4 molécules d'eau par groupement sulfonique. Pour un échantillon conservé pendant 24 heures dans une enceinte à pression saturante de vapeur d'eau, ce sont 10 molécules d'eau par groupement sulfonique qui sont évaporées.

Lors d'un maintien isotherme à 200 °C pendant 5 heures, la perte de masse, en-dehors de la déshydratation (18,6 %) est de 0,4 % de la masse initiale de l'échantillon. Celui-ci perd ensuite 0,9 % de sa masse au cours du chauffage jusqu'à 250 °C. Le maintien à 250 °C pendant deux heures se traduit par une perte supplémentaire de 0,7 % par rapport à la masse initiale. Replacé dans une enceinte à pression saturante de vapeur d'eau, l'échantillon reprend de l'eau d'hydratation. Les groupements sulfoniques n'ont pas été affectés par ce traitement thermique à 250 °C.

Après une analyse thermique différentielle jusqu'à 400 °C, ou un maintien isotherme pendant 5 heures à 200 °C ou pendant 2 heures à 250 °C, l'échantillon présente un spectre infrarouge très voisin de celui qu'il avait avant le traitement thermique, ce qui confirme sa bonne tenue thermique.

EXEMPLE 4

poly (acide benzyl sulfonique siloxane-co-diphényl siloxane-co-vinyl siloxane) (en abrégé : $PBPS_2S$) et poly (acide-benzyl sulfonique siloxane-co-diphényl siloxane-co-vinylsiloxane) (en abrégé : $PBVS_3S$)

Ces produits sont obtenus respectivement par hydrolyse et polycondensation du TEBS et du diphényldiéthoxysilane (PES) dans le premier cas, et du TEBS, du TMVS et du PES dans le second cas.

Les essais ont été effectués, l'un avec 5/6 de TEBS et 1/6 de PES (en moles) pour aboutir au poly (benzylsiloxane-co-diphényl siloxane), l'autre avec 0,77 TEBS, 0,15 TMVS et 0,08 PES pour former le poly (benzylsiloxane-co-diphénylsiloxane-co-vinylsiloxane), cette dernière nomenclature conventionnelle signifiant que les groupements benzyle, allyle et diphényle sont donc rattachés à un atome de silicium différent. Après une semaine à l'étuve à 75 °C, les produits obtenus, solubles dans le tétrachlorure de carbone, ont un spectre infrarouge très voisin de celui du produit correspondant obtenu à l'exemple 3.

Les deux échantillons sont ensuite sulfonés à 20 °C pendant 45 min pour le premier, et pendant 90 min pour le second.

La quantité d'acide chlorosulfonique introduite est calculée pour sulfoner 85 % des cycles benzyle.

Les produits obtenus sont des poudres dont les grains gonflent dans l'eau jusqu'à former un gel visqueux.

Les formules brutes des motifs du polycondensat obtenu peuvent être représentées respectivement par :

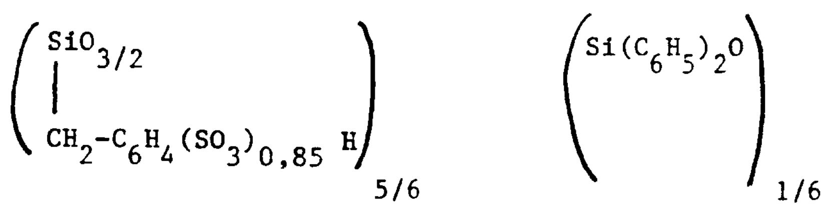

et

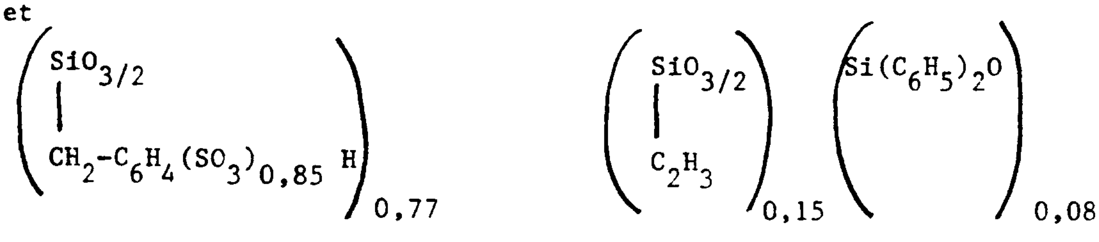

Le produit ($PBPVS_3S$) a été caractérisé de la façon suivante, en opérant sur un échantillon lavé plusieurs fois à l'eau distillée puis séché dans une étuve à 40 °C.

Mise en forme et tenue mécanique

Par pressage à chaud (80 °C) dans un moule à pastiller, on a réalisé une membrane. Cette membrane est translucide et a une bonne tenue mécanique, même après réhydratation.

Une telle membrane peut-être utilisée dans la réalisation d'une pile à combustible hydrogène/oxygène.

Capacité d'échange

Le dosage pH-métrique montre que la capacité d'échange est de 3,5 moles $H^+$/kg.
Le taux pratique de sulfonation des groupements benzyle peut être estimé à environ 0,6.

Conductivité

Sur un échantillon conservé à l'air ambiant, on a mesuré à température ambiante une conductivité de $9.10^{-4}\,\Omega^{-1}.cm^{-1}$. Après une nuit dans une enceinte à pression saturante de vapeur d'eau, l'échantillon présentait une conductivité de $6.10^{-3}\Omega^{-1}.cm^{-1}$.

Analyse thermogravimétrique(vitesse de chauffage : 5 ° C/min.)

Cette étude est effectuée sur un échantillon conservé à l'air ambiant. Jusqu'à 200 ° C environ, la perte de masse (eau) est d'environ 20 %. A partir de 350 ° C, la perte de masse s'accélère et correspond à une dégradation du produit.

La déshydratation mesurée à 150 ° C correspond à la perte de 6 molécules d'eau par groupement sulfonique. (vitesse de chauffage : 5 ° C/min.).

De façon analogue, à celle décrite pour le $PBPVS_3S$, on a préparé (en remplaçant le TMVS par le triméthoxyallylsilane), un poly (acide benzylsulfonique siloxane-co-diphénylsiloxane-co-allylsiloxane).

EXEMPLE 5

Exemple de réticulation avec le divinylbenzène

Au départ de 0,8 mole de TEBS et de 0,2 mole de triéthoxysilane, on effectue la réaction d'hydrolyse et polycondensation, puis la réaction de sulfonation, de façon analogue à celle décrite à l'exemple 1 (taux de sulfonation = 1).

On obtient un polycondensat sulfoné composé de motifs de formule brute

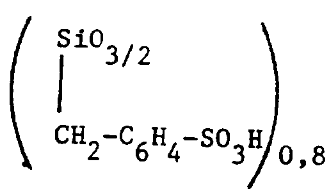

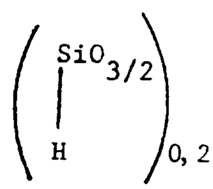

Le polycondensat sulfoné est dissous dans le dichlorométhane et on ajoute sous agitation 0,1 mole de divinylbenzène, ainsi que de l'acide hexachloroplatinique ($2.10^{-5}$ mole, dissous dans l'isopropanol). On évapore les solvants jusqu'à obtention d'un produit visqueux que l'on met sous forme de film par coulée. Le produit est alors réticulé par passage sous une rampe U.V.

Le produit obtenu est constitué de motifs de formule brute

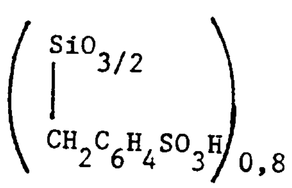

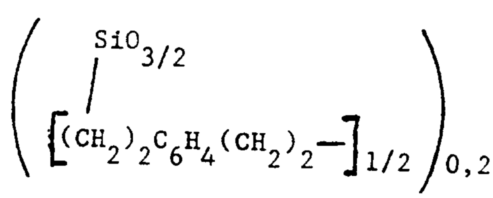

EXEMPLE 6

Une des applications des membranes de l'invention est la réalisation de piles de longue durée à électrolyte solide. Il s'agit en particulier de piles dans lesquelles les réactions d'électrode sont, à l'une des électrodes, l'oxydation de l'hydrogène en ions $H^+$ (la source d'hydrogène étant par exemple un métal

hydruré, ou un couple métal/hydrate), et, à l'autre électrode, la réduction de l'ion $H^+$ par un électron, et l'intercalation de l'hydrogène formé dans un matériau tel que le dioxyde de manganèse, l'oxyde de plomb $PbO_2$ ou l'oxyde de vanadium $V_2O_5$.

Un exemple de réalisation avec un couple métal/hydrate salin, est donné ci-après :

UTILISATION DU PBSS COMME ELECTROLYTE SOLIDE DANS UNE PILE

Zn, ($ZnSO_4$, $7H_2O$), ($Na_3PO_4$, $12H_2O$) / PBSS / $MnO_2$, PBSS, noir d'acétylène

Ici, la solubilité du PBSS dans l'eau procure une grande facilité de mise en forme. En tenant compte de la masse volumique du PBSS, des dimensions du moule et de' l'épaisseur de la pastille désirée, on dissout une masse précise de PBSS dans de l'eau distillée. La solution est dégazée afin d'éviter la formation de bulles pendant le séchage, puis versée dans un moule. Les moules sont réalisés dans des feuilles d'aluminium enduites de téflon. L'évaporation de l'eau peut être effectuée en étuve à 40 ° C.

On a réalisé de cette façon des pastilles de PBSS ayant une épaisseur de 800 $\mu$m.

Avec ces pastilles constituant l'électrolyte solide, on a réalisé la pile indiquée en titre.

On a comparé cette pile avec une pile utilisant comme électrolyte solide un conducteur protonique classique, l'hydrogénophosphate d'uranyle (HUP).

Dans toutes les décharges intensiostatiques la pile Zn/PBSS/$MnO_2$ a eu des comportements très supérieurs à ceux de la pile Zn/HUP/$MnO_2$. Des densités de courant de 110 $mA.cm^{-2}$ ont été obtenues contre un maximum de 5 $mA.cm^{-2}$ avec HUP. Pour une même densité de courant de décharge, la chute de potentiel est beaucoup plus lente avec PBSS. Par exemple pour i = 0,25$mA.cm^{-2}$, la tension est initialement 2,3 V et reste supérieure à 1,5 V pendant plus de 100 heures alors qu'elle chute au bout de 10 heures dans le cas de HUP.

EXEMPLE 7

Supercondensateur

Le principe des supercondensateurs formés de deux électrodes à grande surface spécifique ayant des propriétés de conducteur électronique, entourant une membrane ayant des propriétés de conducteur ionique, est déjà connu.

On obtient ainsi un système de double couche d'accumulation d'ions et d'électrons, à interfaces bloquantes, permettant le stockage de l'énergie électrique.

L'invention a pour objet un tel supercondensateur dans lequel la membrane est telle que définie dans la présente demande.

Les électrodes peuvent être notamment en tissu de graphite ou en poudre de carbone.

On a préparé un tel supercondensateur de la façon suivante :

Les électrodes de ce supercondensateur sont constituées par des tissus de graphite ayant subi un traitement thermique afin d'acoroître leur surface spécifique. Ces tissus sont imprégnés de PBSS par immersion dans une solution aqueuse concentrée et dégazés sous pression réduite, afin de favoriser la pénétration du PBSS dans les pores du graphite. Les électrodes sont ensuite séchées à 40 ° C.

L'électrolyte est une pastille de PBSS de 150 $\mu$m d'épaisseur.

Le supercondensateur est monté en déposant une goutte d'une solution concentrée de PBSS sur la face de l'électrode en contact avec l'électrolyte, pour obtenir une bonne interface. Le dispositif est placé dans un boîtier type "pile bouton" étanchéifié par un joint de silicone pour empêcher sa déshydratation.

Ce supercondensateur présente une capacité de 1F pour une tension de 1,2V.

EXEMPLE 8

Dispositif électrochrome

On connait le principe des systèmes électrochromes utilisant le changement de coloration d'un matériau, lors de son changement de degré d'oxydation, en particulier des conducteurs mixtes (conducteurs ioniques et électroniques) ayant des propriétés d'électrochromisme, c'est-à-dire capable de donner lieu à un changement de coloration, réversible, induit par l'insertion d'ions sous l'influence d'un courant électrique (voir par exemple A. DONNADIEU, Materials Science and Engineering, B3 (1989), pp 185-195.

L'invention concerne un tel système électrochrome, constitué par exemple par deux électrodes ayant des propriétés de conducteur mixte entourant une membrane d'électrolyte solide conducteur protonique ,

dans lequel au moins une des deux électrodes a des propriétés d'électrochomisme mettant en oeuvre l'ion H+, caractérisé par le fait que la membrane est telle que définie dans la présente demande.

Parmi les matériaux doués d'électrochromisme, on citera par exemple $WO_3$, $MoO_3$, $Nb_2O_5$, $V_2O_5$, $TiO_2$, etc ...

On a préparé une cellule électrochrome selon le schéma suivant :

ITO/$WO_3$/Electrolyte solide/$IrO_2$/ITO.

L'ITO (Indium Tin Oxide) est un oxyde d'indium et d'étain, qui est un conducteur électronique transparent. Les électrodes ITO permettent d'appliquer une tension électrique au dispositif.

$WO_3$ est le matériau électrochrome. La réaction (réversible) d'électrode est la suivante :

$$WO_3 + xH^+ + xe^- \underset{2}{\overset{1}{\rightleftarrows}} H_xWO_3$$

$WO_3$ est incolore ; $H_xWO_3$ est de couleur bleue.

$IrO_2$ est un conducteur mixte présentant également un phénomène d'électrochromisme selon les réactions :

$$IrO_2 + xH^+ + xe^- \underset{2}{\overset{1}{\rightleftarrows}} IrO_2H_x$$

$IrO_2H_x$ est gris foncé ; $IrO_2$ est incolore.

On observe donc une coloration dans le sens 1, et une décoloration dans le sens 2.

L'électrolyte solide est une membrane de PBSS.

En fonctionnement, on applique une tension de 1 à 2 V. L'intensité maximale du courant est de 500 mA. La puissance maximale dissipée est de l'ordre de 1 watt.

Durée de vie = supérieure à $2.10^4$ cycles.

Temps de commutation = 20s/100 $cm^2$.

EXEMPLE 9

Pile à combustible

Les piles à combustibles sont caractérisées par le fait qu'elles sont approvisionnées en réactifs (généralement gazeux) de façon continue.

On peut utiliser la membrane de l'invention dans des piles à combustible fonctionnant sur le principe connu de la pile à hydrogène/oxygène. Il s'agit de piles dont un compartiment est alimenté en hydrogène ou précurseur d'hydrogène (comme le méthanol). Le méthanol peut être décomposé en hydrogène et oxydes de carbone, soit en amont, soit in situ,en présence de catalyseurs appropriés. L'autre compartiment est alimenté en oxygène, éventuellement sous forme d'air. Chaque compartiment est muni d'une électrode pour collecter le courant.

Les réactions d'électrodes sont :

$H_2 \rightarrow 2H^+ + 2e^-$
et $1/2\ O_2 + 2H^+ + 2e^- \rightarrow H_2O$.

On utilise une telle pile à des températures généralement inférieures à 200°C, de préférence sous pression, par exemple jusqu'à 5 atmosphères, soit $5.10^5$ Pa environ.

On a réalisé par exemple la pile suivante

Les électrodes (Prototech) sont constituées de platine finement divisé déposé sur graphite. La face destinée à être en contact avec la membrane est imprégnée de polymère de l'exemple 5 par "dip coating" de façon à améliorer le contact physique et électrique entre l'électrode et la membrane.

La membrane est constituée du matériau de l'exemple 5. Il s'agit d'une membrane ayant une épaisseur de 125 µm, qui a subi quatre traitements de lavage à l'eau chaude (80°C) ayant chacun une durée d'une heure, afin d'éliminer d'éventuelles impuretés hydrosolubles.

La membrane est enserrée entre les deux électrodes, le tout étant disposé dans un conteneur approprié, avec des moyens d'alimentation des compartiments d'électrodes respectivement en hydrogène et oxygène humidifiés et sous pression ($3.10^5$ Pa)

On a obtenu une densité de courant de 300 $mA/cm^2$ sous une tension de 0,7V.

**Revendications**

1. Membrane à base de polyorganosiloxane,contenant au moins 10 %, en motifs, de motifs de formule brute (I) :

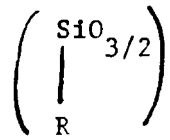

(I)

dans laquelle :
R, lié au silicium par une liaison silicium-carbone, représente

$-CH_2- Ar - (SO_3H)_t$

Ar est un groupement phénylène éventuellement substitue,
et t représente le taux de sulfonation des groupements Ar qui peut varier de 0,1 à 2,
ledit polyorganosiloxane étant éventuellement sous forme hydratée.

2. Membrane selon la revendication 1, caractérisée par le fait que le groupement Ar est substitué par un ou plusieurs halogénures tels que le fluor ou le chlore.

3. Membrane selon l'une quelconque des revendications précédentes, caractérisée par le fait que ledit polyorganosiloxane contient au moins 30 %, et en particulier au moins 50 % de motifs de formule (I).

4. Membrane selon l'une quelconque des revendications précédentes, caractérisée par le fait que ledit polyorganosiloxane contient en outre jusqu'à 90 % en motifs, de motifs de formule (II)

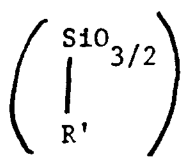

(II)

dans laquelle R' représente - H, ou bien R', lié au silicium par une liaison silicium-carbone, est un groupement organique monovalent facilitant la réticulation, ou bien R' est un groupement divalent réticulant, dont la liaison pendante est une liaison carbone-silicium, reliant entre eux deux motifs du polyorganosiloxane.

5. Membrane selon la revendication précédente, caractérisée par le fait que R' représente -H ou un groupement alcényle à double liaison terminale ayant de 2 à 6 atomes de carbone.

6. Membrane selon la revendication précédente, caractérisée par le fait que R' est un groupement vinyle ou allyle.

7. Membrane selon la revendication 4, caractérisée par le fait que R' est un groupement alcénylène ayant de 4 à 12 atomes de carbone.

8. Membrane selon la revendication 4, caractérisée par le fait que R' est un groupement $- (CH_2)_2 - C_6H_4 - (CH_2)_2 -$.

**9.** Membrane selon l'une quelconque des revendications précédentes, caractérisée par le fait que ledit polyorganosiloxane comporte en outre des motifs de formule (III) et/ou de formule (IV) :

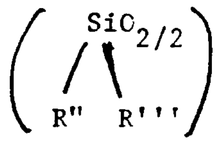 (III) 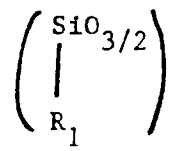 (IV)

dans laquelle $R_1$, R'' et R''' représentent indépendamment des groupements organiques, liés au silicium par une liaison silicium-carbone, qui sont capables de modifier les propriétés mécaniques dudit polyorganosiloxane.

**10.** Membrane selon la revendication précédente, caractérisée par le fait que ledit polyorganoxiloxane contient jusqu'à 10 % en motifs, de motifs III et/ou IV.

**11.** Membrane selon la revendication 9 ou 10, caractérisée par le fait que $R_1$, R'' et R''' représentent indépendamment des groupements aryle éventuellement substitués, ou des groupements alkyle ayant de 1 à 18 atomes de carbone.

**12.** Membrane selon la revendication précédente, caractérisée par le fait que $R_1$, R'' et R''' représentent chacun un groupement phényle éventuellement substitué.

**13.** Membrane selon la revendication 11 ou 12, caractérisée par le fait que lesdits groupements aryle ou phényle sont substitués par un ou plusieurs halogènes tels que le fluor ou le chlore.

**14.** Membrane selon l'une quelconque des revendications 1 à 3, caractérisée par le fait que ledit polyorganosiloxane est constitué de motifs de formule (I).

**15.** Membrane selon l'une quelconque des revendications précédentes, caractérisée par le fait que ledit polyorganosiloxane est à l'état hydraté.

**16.** Membrane selon l'une quelconque des revendications précédentes, caractérisée par le fait que ledit polyorganosiloxane contient en eutre des motifs de formule V

$(SiO_2)$ V

**17.** Membrane selon l'une quelconque des revendications précédentes, caractérisée par le fait qu'elle est constituée uniquement de motifs de formule I et éventuellement de motifs de formule II, III, IV et/ou V.

**18.** Membrane selon la revendication précédente, caractérisée par le fait que ledit polyorganosiloxane contient moins de 10 %, en motifs, et en particulier moins de 5 %, de motifs de formule V.

**19.** Membrane selon la revendication précédente, caractérisée par le fait que ledit polyorganosiloxane est exempt de formule V.

**20.** Procédé de préparation d'une membrane telle que définie dans l'une quelconque des revendications précédentes, caractérisé par le fait que l'on soumet un composé de formule $Si(OAlk)_3R_2$,
dans laquelle $R_2$ représente un groupement benzyle éventuellement substitué non sulfoné ou un groupement $-CH_2-Ar-SO_3H$, Ar étant un groupement phénylène éventuellement substitué, et Alk est un groupement alkyle inférieur,
éventuellement en mélange, dans les proportions requises, avec au moins un composé de formules $Si(OAlk)_3R_3$ et/ou $Si(OAlk)_2R''R'''$ et/ou
$Si(OAlk)_3R_1$, et/ou $Si(OAlk)_4$,
$R_1$, R'' et R''' étant tels que définis dans l'une quelconque des revendications 9 et 11 à 14, et $R_3$ est un groupement précurseur d'un groupement réticulant,
à une réaction d'hydrolyse et de polycondensation, selon les méthodes connues, pour obtenir le polyorganosiloxane correspondant, puis que, dans le cas où $R_2$ représente un groupement benzyle non

sulfoné éventuellement substitué, l'on soumet le produit obtenu à une réaction de sulfonation, et que, le cas échéant on soumet le produit obtenu à une réaction de réticulation selon les méthodes connues, et que l'on met le produit obtenu sous la forme désirée pour constituer ladite membrane.

**21.** Procédé selon la revendication 20, caractérisé par le fait que $R_3$ représente - H ou un groupement alcényle à double liaison terminale ayant de 2 à 6 atomes de carbone.

**22.** Procédé selon la revendication 20 ou 21, caractérisé par le fait que la réaction d'hydrolyse et de polycondensation consiste à ajouter au produit de départ ou au mélange de produits de départ une quantité d'eau suffisante pour hydrolyser les groupements alkoxyallane des produits de départ en groupements silanols correspondants, puis à chauffer le mélange réactionnel jusqu'à poids constant, a une température pouvant aller de 40 à 70 °C.

**23.** Procédé selon l'une quelconque des revendications 20 à 22, caractérisé par le fait que le groupement Alk est un groupement méthyle, éthyle ou isopropyle.

**24.** Procédé selon l'une quelconque des revendications 20 à 23, caractérisé par le fait que la réaction de sulfonation est effectuée à l'aide d'un acide halogénosulfonique.

**25.** Procédé selon la revendication précédente, caractérisé par le fait que la réaction de sulfonation est effectué à l'aide de l'acide chlorosulfonique.

**26.** Procédé selon l'une quelconque des revendications 20 à 25, caractérisé par le fait que l'on effectue la réticulation soit par chauffage final d'un produit obtenu contenant des motifs $Si(OAlk)_3R_3$, $R_3$ étant un groupement alcényle à double liaison terminale, soit par hydrosilylation d'un produit obtenu contenant des motifs $Si(OAlk)_3H$, en présence d'un agent réticulant diénique.

**27.** Membrane à base de polyorganosiloxane, pouvant être obtenue selon le procédé de l'une quelconque des revendications 20 à 26.

**28.** Utilisation d'une membrane telle que définie dans l'une quelconque des revendications 1 à 19 et 27, comme conducteur ionique solide ou comme résine échangeuse d'ions.

**29.** Utilisation selon la revendication 28, comme électrolyte solide pour accumulateurs, piles, piles à combustible, capteurs, dispositifs électrochromiques ou supercondensateurs.

## Claims

**1.** Membrane based on polyorganosiloxane, at least 10% of whose structural units are ones conforming to the basic formula (I):

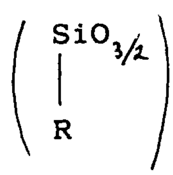

(I)

in which:
R, which is bound to the silicon atom by a silicon-carbon bond, represents $-CH_2-Ar-(SO_3H)_t$, where Ar is a phenylene group, which may be substituted, and t represents the degree of sulphonation of the Ar groups, which may range from 0.1 to 2, the said polyorganosiloxane being in hydrated form if necessary.

**2.** Membrane according to Claim 1, characterized in that the Ar group is substituted with one or more halides such as fluorine or chlorine.

**3.** Membrane according to either of the previous Claims, characterized in that the said polyorganosiloxane contains at least 30% and in particular at least 50% of structural units conforming to formula (I).

**4.** Membrane according to any of the previous Claims, characterized in that the said polyorganosiloxane also contains up to 90% of structural units conforming to formula (II):

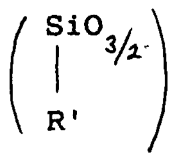

(II)

in which R' represents -H, or R'is bound to the silicon by a silicon-carbon bond and is a monovalent organic group that facilitates reticulation, or R' is a divalent reticulating group whose counterpart bond is a carbon-silicon bond which connects two polyorganosiloxane units to one another.

**5.** Membrane according to the previous Claim, characterized in that R' represents -H or an alkenyl group with a terminal double-bond and possessing 2 to 6 carbon atoms.

**6.** Membrane according to the previous Claim, characterized in that R' is a vinyl group or an allyl group.

**7.** Membrane according to Claim 4, characterized in that R' is an alkenylene group possessing 4 to 12 carbon atoms.

**8.** Membrane according to Claim 4, characterized in that R' is a $-(CH_2)_2-C_6H_4-(CH_2)_2-$ group.

**9.** Membrane according to any of the previous Claims, characterized in that the said polyorganosiloxane also comprises structural units of formula (III) and/or of formula (IV):

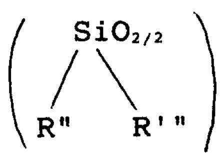

(III)

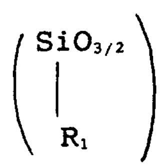

(IV)

in which $R_1$, R'' and R''' independently represent organic groups bound to the silicon atom by a silicon-carbon bond, which are capable of modifying the mechanical properties of the said polyorganosiloxane.

**10.** Membrane according to the previous Claim, characterized in that up to 10% of the structural units of the said polyorganosiloxane are units of formula III and/or IV.

**11.** Membrane according to Claims 9 or 10, characterized in that $R_1$, R'' and R''' independently represent aryl groups which may be substituted, or alkyl groups with 1 to 18 carbon atoms.

**12.** Membrane according to the previous Claims, characterized in that $R_1$, R'' and R''' each represent a phenyl group, which may be substituted.

**13.** Membrane according to Claims 11 or 12, characterized in that the said aryl or phenyl groups are substituted with one or more halogens such as fluorine or chlorine.

**14.** Membrane according to any of Claims 1 to 3, characterized in that the said polyorganosiloxane consists of structural units conforming to formula (I).

**15.** Membrane according to any of the previous Claims, characterized in that ths said polyorganosiloxane is in the hydrated state.

**16.** Membrane according to any of the previous Claims, characterized in that the said polyorganosiloxane also contains structural units of formula (V):

$(SiO_2)$ (V)

**17.** Membrane according to any of the previous Claims, characterized in that it consists uniquely of structural units of formula I and if necessary structural units of formula II, III, IV and/or V.

**18.** Membrane according to the previous Claim, characterized in that the said polyorganosiloxane contains less than 10% of structural units, and in particular less than 5% of structural units of formula V.

**19.** Membrane according to the previous Claim, characterized in that the said polyorganosiloxane has no structural units of formula V.

**20.** Process for the preparation of a membrane as defined in any of the previous Claims, characterized in that a compound of formula $Si(OAlk)_3R_2$, in which $R_2$ represents a non-sulphonated benzyl group which may be substituted, or a $-CH_2-Ar-SO_3H$ group, in which Ar is a phenylene group which may be substituted, and Alk is a lower alkyl group,
if necessary mixed in the requisite proportions with at least one compound of the formulae $Si(OAlk)_3R_3$ and/or $Si(OAlk)_2R''R'''$ and/or $Si(OAlk)_3R_1$, and/or $Si(OAlk)_4$,
in which $R_1$, R'' and R''' are as defined in any of Claims 9 and 11 to 14, and $R_3$ is a precursor group of a reticulating group,
are subjected to a reaction of hydrolysis and polycondensation, in accordance with known methods, to obtain the corresponding polyorganosiloxane, after which, in the case when $R_2$ represents a non-sulphonated but possibly substituted benzyl group, the product obtained is subjected to a sulphonation reaction, and if necessary the product obtained is subjected to a reticulation reaction in accordance with known methods, and the product obtained is then put into the desired form to constitute the said membrane.

**21.** Process according to Claim 20, characterized by the fact that $R_3$ represents -H or an alkenyl group with a terminal double-bond and with 2 to 6 carbon atoms.

**22.** Process according to Claims 20 or 21, characterized in that the hydrolysis and polycondensation reaction consists in adding to the starting product or to the mixture of starting products a quantity of water sufficient to hydrolyse the alkoxyallane groups of the starting products into corresponding silanol groups, and then heating the reaction mixture to constant weight, at a temperature ranging from 40 to 70 °C.

**23.** Process according to any of Claims 20 to 22, characterized in that the Alk group is a methyl, ethyl or isopropyl group.

**24.** Process according to any of Claims 20 to 23, characterized in that the sulphonation reaction is carried out using a halogensulphonic acid.

**25.** Process according to the previous Claim, characterized in that the sulphonation reaction is carried out using chlorosulphonic acid.

**26.** Process according to any of Claims 20 to 25, characterized in that the reticulation reaction is carried out either by the final heating of a product obtained containing structural units $Si(OAlk)_3R_3$, where $R_3$ is an alkenyl group with a terminal double-bond, or by hydrolysis of a product obtained containing structural units $Si(OAlk)_3H$, in the presence of a diene reticulating agent.

**27.** Membrane based on polyorganosiloxane, that can be obtained in accordance with the process according to any of Claims 20 to 26.

**28.** Use of a membrane as defined in any of Claims 1 to 19 and 27, as a solid ionic conductor or as an ion-exchange resin.

29. Use according to Claim 28, as a solid electrolyte for accumulators, cells, fuel cells, collectors, electrochromic devices or superconductors.

**Patentansprüche**

1. Membran auf der Basis eines Polyorganosiloxans, das Einheiten der Summenformel (I)

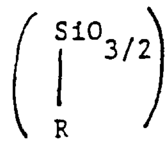

(I),

in der R, das mit dem Siliciumatom über eine Silicium-Kohlenstoff-Bindung verbunden ist,

$-CH_2-Ar(SO_3H)_t$

darstellt, worin bedeuten:
- Ar ggfs. substituiertes Phenylen und
- t den Sulfonierungsgrad der Gruppen Ar, der von 0,1 bis 2 variieren kann,

in einer Menge von 10 %, bezogen auf die Gesamtmenge der Einheiten, enthält, wobei das obengenannte Polyorganosiloxan ggfs. in hydratisierter Form vorliegt.

2. Membran nach Anspruch 1, dadurch gekennzeichnet, daß die Gruppe Ar mit einem oder mehreren Halogenatomen, wie z.B. Fluor oder Chlor, substituiert ist.

3. Membran nach einem der vorhergehenden Ansprüche, dadurch gekennzeichnet, daß das Polyorganosiloxan mindestens 30 %, vorzugsweise mindestens 50 %, Einheiten der Formel (I) enthält.

4. Membran nach einem der vorhergehenden Ansprüche, dadurch gekennzeichnet, daß das Polyorganosiloxan außerdem Einheiten der Formel (II)

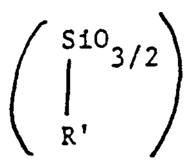

(II),

in der R' Wasserstoff oder eine an das Siliciumatom über eine Silicium-Kohlenstoff-Bindung gebundene, einwertige organische Gruppe, die die Vernetzung erleichtert, oder eine zweiwertige vernetzende Gruppe darstellt, deren andere Bindung eine Kohlenstoff-Silicium-Bindung ist, die zwei Einheiten des Polyorganosiloxans miteinander verbindet, in einer Menge von bis zu 90 %, bezogen auf die Gesamtmenge der Einheiten, enthält.

5. Membran nach dem vorhergehenden Anspruch, dadurch gekennzeichnet, daß R' Wasserstoff oder ein $C_{2-6}$-Alkenyl mit endständiger Doppelbindung darstellt.

6. Membran nach dem vorhergehenden Anspruch, dadurch gekennzeichnet, daß R' eine Vinyl- oder Allylgruppe ist.

7. Membran nach Anspruch 4, dadurch gekennzeichnet, daß R' ein $C_{4-12}$-Alkenyl ist.

8. Membran nach Anspruch 4, dadurch gekennzeichnet, daß R' eine Gruppe $-(CH_2)_2-C_6H_4-(CH_2)_2-$ ist.

9. Membran nach einem der vorhergehenden Ansprüche, dadurch gekennzeichnet, daß das Polyorganosiloxan außerdem Einheiten der Formel (III) und/oder der Formel (IV)

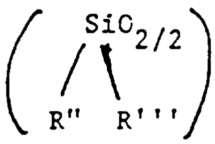 (III) 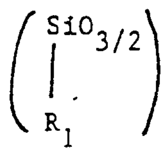 (IV)

enthält, worin $R_1$, R'' und R''' unabhängig organische Gruppen darstellen, die an das Siliciumatom über eine Silicium-Kohlenstoff-Bindung gebunden und imstande sind, die mechanischen Eigenschaften des Polyorganosiloxans zu modifizieren.

**10.** Membran nach dem vorhergehenden Anspruch, dadurch gekennzeichnet, daß das Polyorganosiloxan bis zu 10 % Einheiten der Formel III und/oder IV, bezogen auf die Gesamtmenge der Einheiten, enthält.

**11.** Membran nach Anspruch 9 oder 10, dadurch gekennzeichnet, daß $R_1$, R'' und R''' unabhängig Aryl oder $C_{1-18}$-Alkyl darstellen, das ggfs. substituiert ist.

**12.** Membran nach dem vorhergehenden Anspruch, dadurch gekennzeichnet, daß die Gruppen $R_1$, R'' und R''' jeweils Phenyl darstellen, das ggfs. substituiert ist.

**13.** Membran nach Anspruch 11 oder 12, dadurch gekennzeichnet, daß die Aryl- oder Phenylgruppen mit einem oder mehreren Halogenatomen, wie z.B. Fluor oder Chlor, substituiert sind.

**14.** Membran nach einem der Ansprüche 1 bis 3, dadurch gekennzeichnet, daß das Polyorganosiloxan aus Einheiten der Formel (I) besteht.

**15.** Membran nach einem der vorhergehenden Ansprüche, dadurch gekennzeichnet, daß das Polyorganosiloxan in hydratisiertem Zustand vorliegt.

**16.** Membran nach einem der vorhergehenden Ansprüche, dadurch gekennzeichnet, daß das Polyorganosiloxan außerdem Einheiten der Formel (V)

$(SiO_2)$ (V)

enthält.

**17.** Membran nach einem der vorhergehenden Ansprüche, dadurch gekennzeichnet, daß sie ausschließlich aus Einheiten der Formel (I) und ggfs. zusätzlich aus Einheiten der Formeln (II), (III), (IV) und/oder (V) besteht.

**18.** Membran nach dem vorhergehenden Anspruch, dadurch gekennzeichnet, daß das Polyorganosiloxan weniger als 10 % Einheiten und vorzugsweise weniger als 5 % Einheiten der Formel (V), bezogen auf die Gesamtmenge der Einheiten, enthält.

**19.** Membran nach dem vorhergehenden Anspruch, dadurch gekennzeichnet, daß das Polyorganosiloxan keine Einheiten der Formel (V) enthält.

**20.** Verfahren zur Herstellung von Membranen nach einem der vorhergehenden Ansprüche, dadurch gekennzeichnet, daß eine Verbindung der Formel $Si(OAlk)_3R_2$, in der bedeuten:
- $R_2$ ggfs. substituiertes, nicht sulfoniertes Benzyl oder eine Gruppe $-CH_2-Ar-SO_3H$, worin Ar ggfs. substituiertes Phenylen darstellt und
- Alk niederes Alkyl,

ggfs. in einem Gemisch, das die erforderlichen Mengenverhältnisse aufweist, mit mindestens einer Verbindung der Formeln $Si(OAlk)_3R_3$ und/oder $Si(OAlk)_2R''\ R'''$ und/oder $Si(OAlk)_3R_1$ und/oder $Si(OAlk)_4$, wobei $R_1$, R'' und R''' dasselbe bedeuten wie in einem der Ansprüche 9 und 11 bis 14 und worin $R_3$ eine Vorläufergruppe für eine vernetzende Gruppe ist,
einer Hydrolyse- und Polykondensationsreaktion nach bekannten Verfahren unter Erhalt des entsprechenden Polyorganosiloxans unterzogen wird,

daß, wenn $R_2$ ggfs. substituiertes, nicht sulfoniertes Benzyl darstellt, das erhaltene Produkt einer Sulfonierungsreaktion unterzogen wird,
daß das erhaltene Produkt erforderlichenfalls einer Vernetzungsreaktion nach bekannten Verfahren unterzogen wird und
daß man das erhaltene Produkt zur Bildung der Membran in die gewünschte Form bringt.

**21.** Verfahren nach Anspruch 20, dadurch gekennzeichnet, daß $R_3$ Wasserstoff oder ein $C_{2-6}$-Alkenyl mit endständiger Doppelbindung darstellt.

**22.** Verfahren nach Anspruch 20 oder 21, dadurch gekennzeichnet, daß die Hydrolyse- und Polykondensationsreaktion darin besteht, dem Ausgangsprodukt oder dem Gemisch von Ausgangsprodukten eine zur Hydrolyse der Alkoxysilangruppen der Ausgangsprodukte in entsprechende Silanolgruppen ausreichende Wassermenge zuzusetzen und anschließend das Reaktionsgemisch bei einer Temperatur von 40 bis 70 °C zu halten, bis das Gewicht konstant ist.

**23.** Verfahren nach einem der Ansprüche 20 bis 22, dadurch gekennzeichnet, daß die Alkylgruppe Methyl, Ethyl oder Isopropyl ist.

**24.** Verfahren nach einem der Ansprüche 20 bis 23, dadurch gekennzeichnet, daß die Sulfonierungsreaktion mit einer Halogensulfonsäure durchgeführt wird.

**25.** Verfahren nach dem vorhergehenden Anspruch, dadurch gekennzeichnet, daß die Sulfonierungsreaktion mit Chlorsulfonsäure durchgeführt wird.

**26.** Verfahren nach einem der Ansprüche 20 bis 25, dadurch gekennzeichnet, daß die Vernetzung entweder unter abschließendem Erwärmen eines erhaltenen Produkts, das Einheiten $Si(OAlk)_3R_3$ enthält, worin $R_3$ ein Alkenyl mit endständiger Doppelbindung darstellt, oder unter Hydrosilylierung eines erhaltenen Produkts, das Einheiten $Si(OAlk)_3H$ enthält, in Gegenwart eines Dien-Vernetzungsmittels, erfolgt.

**27.** Membran auf der Basis eines Polyorganosiloxans, das nach dem Verfahren nach einem der Ansprüche 20 bis 26 hergestellt werden kann.

**28.** Verwendung der Membran nach einem der Ansprüche 1 bis 19 und 27, als fester Ionenleiter oder als Ionenaustauscherharz.

**29.** Verwendung der Membran nach Anspruch 28 als fester Elektrolyt in Akkumulatoren, Batterien, Brennstoffzellen, Sensoren, elektrochromen Vorrichtungen und Superkondensatoren.